# EUROPEAN PATENT APPLICATION

(11) **EP 4 850 516 A1**
(43) Date of publication of application: **09.12.2026**
(21) Application number: 25181306.9
(22) Date of filing: 06.06.2025
(51) Int. Cl.: A01D 41/12, A01D 41/127, A01F 12/40, A01F 12/44

(54) **A COMBINE HARVESTER COMPRISING A BLOCKAGE DETECTION SYSTEM**

(71) Applicant: CNH Industrial Belgium N.V., 8210 Zedelgem (BE); CNH Industrial America LLC, New Holland, PA 17557 (US)
(72) Inventor: Mahieu, Thomas, 8210 Zedelgem (BE); Somers, Tom, 8210 Zedelgem (BE); Isaac, Nathan, New Holland, 17557 (US)
(74) Representative: CNH Industrial IP Department

(57) **Abstract**

The combine harvester (1) comprises a separating system for separating grain from crop residue material, a crop residue transport system and a crop residue removal system. In addition, the harvester comprises one or more sensors (40) for measuring air pressures or differential air pressures along trajectories (30,31) of crop residue material. The (differential) pressure is monitored in terms of whether a pressure-related parameter exceeds a given threshold. Following or together with the monitoring of pressure-related parameter in the above-described way, one or more additional sensor outputs are verified, which may include one or more of a grain yield related signal, a grain loss related signal and a tailings return related signal. The pressure related parameter(s) and the additional verification signals are assessed in a control unit (50), configured to generate an indication that a blockage is occurring when one or more verification signals exhibit a predefined behaviour in conjunction with the pressure-related parameter(s) exceeding one of the thresholds.

## Description

### Field of the Invention

The present invention is related to agricultural machinery, in particular to combine harvesters.

### State of the art.

An agricultural harvester known as a combine harvester or shortly "combine" is historically termed such because it combines multiple harvesting functions within a single harvesting unit, such as picking, threshing, separating and cleaning. During the process of harvesting in a combine, the grain is gathered and saved while crop material other than grain is expelled from the combine. The non-grain crop material or crop residue is derived from the two areas in the combine where grain is separated from non-grain material, namely the threshing rotor or rotors and the sieves of the cleaning system. The material expelled from the threshing rotor(s) is generally referred to as straw and includes much of the larger plant material such as stalks, stems, cobbs, leaves and the like as well as foreign or non-crop material. The material expelled from the cleaning system is generally referred to as chaff and includes much of the finer plant material residue, such as pods, husk fragments and particulates.

The straw is propelled towards the rear of the combine by a rotating beater, while chaff is removed by an air flow produced by a fan. The combined flows of straw and chaff may be removed from the combine in the form of windrows deposited on the field or by chopping up the larger stalk material into smaller particles and spreading these particles out onto the field behind the advancing combine. Many combine harvesters today are furthermore equipped with a weed seed mill configured to destroy weed seeds in the chaff stream, before ejecting the chaff from the combine, in order to prevent the seeds from germinating on the field.

In order to ensure optimal harvesting, the various streams of larger and smaller crop residue need to be transported smoothly through the harvester. It is possible however that residue material becomes stuck along its trajectory from the threshing or cleaning sections towards the rear of the machine, which can lead to a blockage of the crop residue stream. Such a blockage can quickly lead to a breakdown of the normal harvesting process. Therefore a fast and reliable detection of such blockages is of great importance.

Patent publication document EP4205527 is related to the use of air pressure sensors mounted in the path of the residue material, notably at the rear end of a reciprocating cleaning shoe, for providing an indication of residue blockage downstream of the pressure sensor location. However, a rise in air pressure is not always linked to a blockage, so that an air pressure based system of detecting residue blockages is likely to result in frequent false detections.

### Summary of the invention

The invention is related to a combine harvester as described in the appended claims. The combine harvester comprises a separating system for separating grain from crop residue material, a crop residue transport system and a crop residue removal system. Said systems can be in accordance with known harvester technology. In addition, the harvester comprises one or more sensors for measuring air pressures or differential air pressures along trajectories of crop residue material, for example in the vicinity of a sieve applied for separating grain from fine chaff material. The (differential) pressure is monitored in terms of whether one or more pressure-related parameters exceed a given threshold. The one or more pressure-related parameters are determined by a control unit configured to receive signals from the one or more pressure sensors. According to embodiments, the pressure-related parameter(s) can be one or more of the following : the (differential) pressure level as such, an increase of the (differential) pressure from a first level to a second level, or a rate of change of the (differential) pressure. Following or together with the monitoring of air pressure related signals in the above-described way, one or more additional sensor outputs are verified, which may include one or more of a grain yield related signal, a grain loss related signal and a tailings return related signal. The pressure related parameter(s) and the additional verification signals are assessed in the control unit, configured to generate an indication that a blockage is occurring when one or more verification signals exhibit a predefined behaviour in conjunction with the pressure-related parameter(s) exceeding one or more of the thresholds. For example a grain yield related signal that decreases and remains low while one or more pressure-related parameters rise above the threshold are indicative of a blockage.

By incorporating a verification step in addition to a pressure measurement, the ability of producing a correct assessment of a blockage of residue material is improved. According to embodiments, specific blockage mitigation actions can be taken after determining the occurrence of a blockage event.

### Brief description of the figures

Figure 1 is a schematic image of a combine harvester as known in the prior art, with indications of the main components of the harvester.
Figure 2a illustrates the streams of crop residue material and a possible pressure sensor location in a harvester according to an embodiment of the invention. Throughout this description, the terms 'upstream' and 'downstream' are referring to the direction of travel of crop residue streams within a combine harvester, as illustrated for example by the arrows 30 and 31 in Figure 2a.
Figure 2b shows an example of a type of pressure sensor applicable in a harvester according to the invention.
Figures 3a to 3d illustrate a pressure signal and corresponding signals applicable as verification signals according to embodiments of the invention.
Figure 4a illustrates a baffle door for guiding crop residue material towards a weed seed mill, in accordance with an embodiment of the invention.
Figure 4b illustrates an alternative baffle door configuration with a better capability of mitigating a blockage of crop residue at the inlet of the weed seed mill.

### Detailed description of preferred embodiments of the invention

Preferred embodiments will now be described with reference to the drawings. The detailed description is not limiting the scope of the invention, which is defined only by the appended claims.

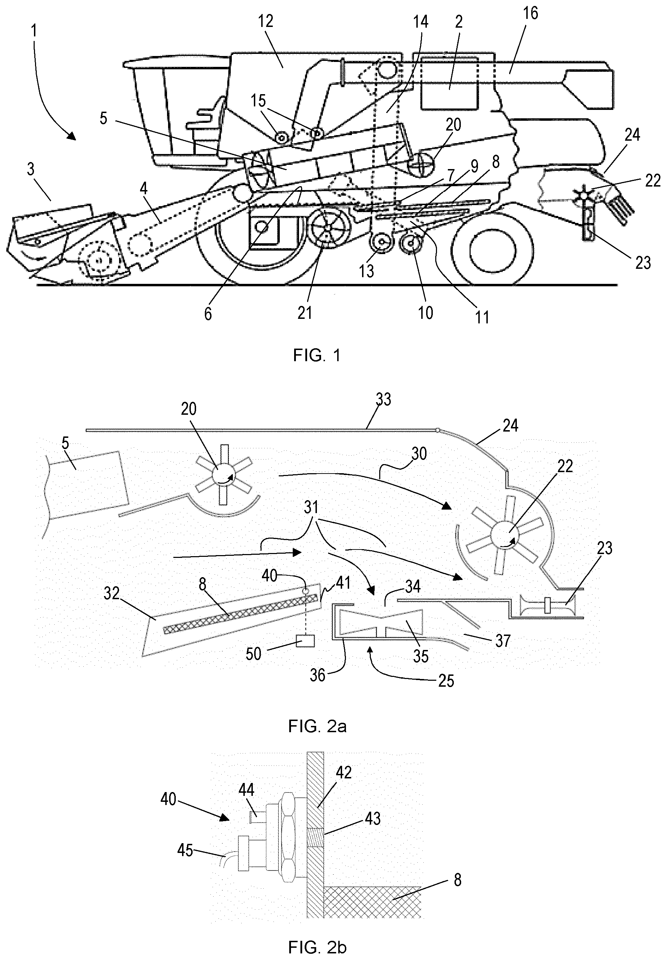

The combine harvester 1 illustrated in Figure 1 includes an engine 2, a header 3 for cutting crops from the field, and for gathering the crops towards the inlet of a feeder 4. The crop processing portion of the combine 1 includes a rotatable threshing rotor 5 for separating grain-containing material from larger crop residue, also referred to as straw. A single longitudinally mounted threshing rotor 5 may be applied as shown in the drawing, but twin longitudinal rotors or transversely mounted rotors are equally possible.

Grain-containing material falls through gratings beneath the threshing rotor 5 onto a grain pan 6 and onward onto a sieve assembly which may comprise an optional pre-cleaning sieve 7, an upper sieve 8 and a lower sieve 9. The sieves may be mounted in a common frame, also referred to as a cleaning shoe, or in separate frames (shoes). The grain pan 6 and the sieves 7-9 are coupled to a drive mechanism (not shown) for subjecting the pan and the sieves to respective reciprocating motions so as to advance the crop material and to separate the grain from smaller residue such as seedpods, husks and the like, generally referred to as chaff, by a winnowing action due to the air flow created by a blower fan 21. The threshing rotor 5, the fan 21, and the sieves 7-9 are defined within the present description as forming the main components of the separating system of the combine.

Insufficiently separated crop material that nevertheless falls through the sieves, also called tailings, is transported back to the grain pan 6 and the sieve assembly 7-9 or to the threshing rotor 5 by a transversally arranged tailings return auger 10 and an inclined tailings elevating auger 11. Fully separated grains are collected in a grain tank 12 through the combined action of a clean grain auger 13 and a grain elevator 14. From the tank 12, the grains may be evacuated from the harvester through further augers 15 at the bottom of the grain tank 12 and through a pivotable spout 16.

A rotor, commonly referred to as a beater 20 is rotatably mounted downstream of the threshing rotor 5, for propelling straw material from the area where the straw exits the threshing rotor 5 toward the rear of the combine 1. The blower fan 21 is configured to produce an air flow that blows a stream of chaff toward the rear of the combine 1. The beater 20 and the blower fan 21 together constitute a residue transport system for transporting crop residue towards a crop residue removal system mounted at the rear of the combine. The fan 21 having both a separating and a transport function is thus considered for the purpose of defining the invention as part of the separating system and of the crop residue transport system.

The residue removal system may comprise a chopper 22 and a spreader 23. A vertically arranged spreader 23 is shown in Figure 1, but a horizontal spreader is equally possible. Optionally, a weed seed mill (not shown) may be included as part of the residue removal system. A hinged door 24 may be provided for bypassing the chopper 22 and thereby windrowing the straw onto the field.

Regardless of particular details of the crop removal system, the invention is related to a combine harvester comprising a system for detecting a blockage of crop residue material between the separating system and the crop removal system, or within or in close proximity to components of the crop removal system. The blockage detection system comprises one or more air pressure sensors configured to measure an air pressure or a differential air pressure at locations along trajectories of residue material from the separating system to the residue removal system. According to an embodiment, one or more air pressure sensors is (are) mounted on a cleaning shoe comprising the upper sieve 8. Suitable air pressure sensors as well as suitable locations for mounting the air pressure sensor or sensors, as well as suitable ways of installing the sensors are disclosed in documents EP4205527 and EP2022312, incorporated herein by reference.

Figure 2a illustrates the crop residue streams towards the residue removal system, comprising in the illustrated case a windrowing door 24, a chopper 22 and a horizontally arranged spreader 23, as well as a weed seed mill 25. The arrow 30 gives an indication of the trajectory of straw material exiting the threshing rotor 5 and actuated by the beater 20, while the arrows 31 indicate the path of chaff that is blown by the blower fan in the direction of the residue removal system. The upper sieve 8 is mounted in a cleaning shoe 32 which may be configured to undergo a reciprocating back and forth movement along the longitudinal direction of the harvester. The trajectories of straw and chaff are delimited by a straw hood having an upper ceiling 33 and sidewalls parallel to the plane of the drawings.

The weed seed mill 25 comprises an inlet port 34 through which chaff can enter the weed seed mill, which itself comprises one or more rotors 35 rotatable within respective stator housings 36. Processed chaff exits the weed seed mill through exit port 37. A possible weed seed mill design applicable in a harvester according to the invention is disclosed in patent publication document WO2023049282, incorporated herein by reference. In the latter design, guide doors are included for guiding chaff to the weed seed mill inlet. These doors are not shown in Figure 2a, but they will be described further in this description, together with a possible alternative configuration for guiding the material.

At least one pressure sensor 40 is mounted on a sidewall of the cleaning shoe 32, above the sieve 8 and in close proximity to the end face 41 of the cleaning shoe 32. Preferably a second pressure sensor is mounted on the opposite side of the cleaning shoe 32, also above the sieve 8.

The detail view in Figure 2b as seen from a viewpoint facing the end face 41 illustrates an example of a differential air pressure sensor 40 as disclosed in EP4205527, mounted on the sidewall 42 of the cleaning shoe 32. This may be for instance a commercially available differential pressure transducer available from Kavlico, of Moorpark, Calif. USA, operable for sensing and detecting changes and variances in air pressure. Sensor 40 is threadedly mounted in a hole in the side wall 42. Sensor 40 may be of at least generally well known construction including a port 43 in connection with the interior of the shoe, i.e along the trajectory of crop residue blown towards the rear by the blower fan, and another port 44 in connection with another location, such as ambient conditions on the exterior of the combine, and is operable for sensing and detecting differences in pressure between the respective ports 43,44 and outputting a signal representative thereof over a suitable connection, which may be a wire connection 45 as shown or a wireless connection if the sensor is configured therefor.

This sensor type thus outputs a signal representative of the pressure difference between the pressure inside the cleaning shoe 32 and the pressure outside said cleaning shoe.

For the purpose of the present invention, a differential pressure is defined as a difference between a pressure along a trajectory of residue material from the separating system to the residue removal system and a reference pressure, which may be the pressure outside the cleaning shoe when the sensor shown in Figure 2b is used. The reference pressure may however also be a pressure measured at another location. Another example of a differential pressure applicable in the invention may be the difference between the pressures measured above and below the upper sieve. For this purpose, additional pressure sensors could be mounted beneath the upper sieve 8.

It is however also possible to use absolute pressure sensors configured to output an absolute value of the air pressure inside the cleaning shoe. An example of such a sensor is disclosed in EP2022312.

The blockage detection system further includes a control unit 50 configured to receive signals representative of the measured pressures and/or differential pressures. The control unit 50 is symbolized by a rectangle in Figure 2a, but in reality the control unit is preferably incorporated elsewhere in the harvester for example as part of control electronics hardware of the harvester. The pressure sensor(s) 40 may be connected to said hardware by wire connections or wireless connections.

The control unit 50 is furthermore configured to receive one or more signals from additional sensors mounted on the combine harvester. According to the invention, the combined behaviour of the pressure or differential pressure measured by the one or more pressure sensors 40 and of the output of one or more additional sensors is assessed in order to derive therefrom an indication on whether or not a blockage of residue material is occurring.

According to embodiments of the invention, the control unit 50 is configured (e.g. programmed), to detect a rise of a pressure-related parameter above a given threshold. The parameter is determined by the control unit 50 on the basis of the pressure signal or signals received from the one or more sensors. When detected, said rise does not automatically result in the control unit issuing an indication that blockage is occurring. Before such an indication is given, the control unit verifies the behaviour or one or more additional sensors.

The 'pressure-related parameter' can be any parameter obtained on the basis of measurement signals generated by the one or more pressure sensors, that can be used as a parameter indicative of a pressure increase. It can be the level of the absolute or differential pressure as such. It can also be an increase of the pressure or differential pressure from a first value to a second value. A further possible output is the rate of change of the (differential) pressure during a pressure rise. Possibly multiple pressure-related parameters are verified relative to respective thresholds. It is also possible that the pressure-related parameter that is compared to the threshold is calculated on the basis of one or more other pressure-related parameters.

The inventors have found that the probability of a blockage occurring increases significantly when a rise in the pressure-related parameter above a given threshold is accompanied by a predefined behaviour of the signals generated by additional sensors. Said additional sensors are not necessarily pressure sensors, and indeed according to a number of embodiments, non-pressure related signals are used as the additional signals, hereafter referred to as verification signals. The additional sensors providing these verification signals may be sensors which are known as such, and included in many combine harvesters for monitoring specific parameters of the harvesting process.

A number of embodiments involving sensors suitable for producing verification signals and of the behaviour of these signals that is indicative of a blockage are given hereafter.

A first sensor output used as a verification signal in accordance with embodiments of the invention is the output signal of a yield sensor. This is a sensor configured to measure the amount of fully separated grains delivered to the grain tank 12. This amount is usually measured as a mass of grains per unit time, i.e. a mass flow rate. An example of a yield sensor of this type is described in patent publication document EP3278652, incorporated herein by reference. The sensor is mounted at the top of the grain elevator 14 and includes an impact plate coupled to a force transducer. The impacts of grains onto the plate generate forces on the plate which are representative of the mass flow rate and thus of the yield.

The inventors have found that a rise of one or more pressure-related parameters above a given threshold, for example based on the pressure sensor locations indicated in Figure 2a, can be confirmed to be caused by a blockage of residue material, if the output signal of a yield sensor decreases to a steady low signal while the pressure signal remains high. This behaviour of the yield sensor is indicative of the fact that the increased pressure-related parameter is not correlated to an increase in the amount of processed crops (i.e. the throughput). When this behaviour of the yield signal is detected by the control unit 50 in a harvester according to the invention, said control unit is configured to generate an indication that a blockage is occurring. Details of how such an indication can be given and of possible blockage mitigation actions will be described further in this description.

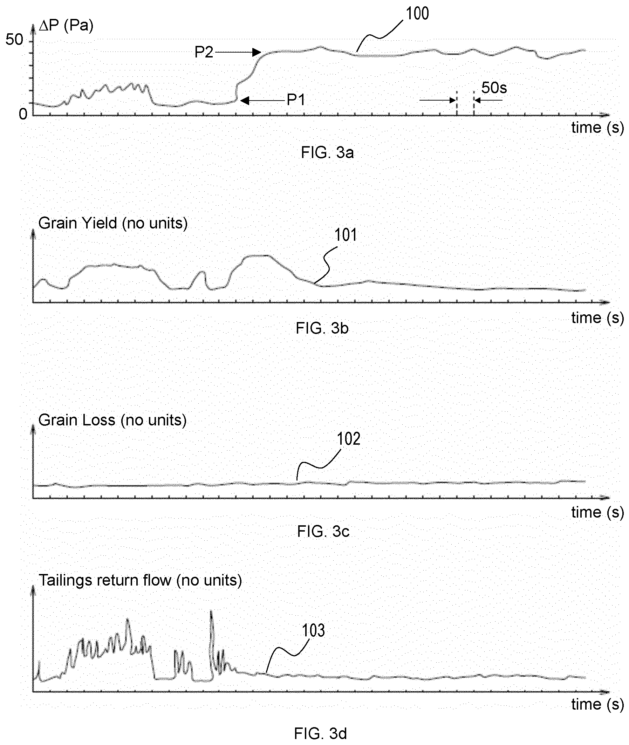

Figures 3a and 3b are measurement curves obtained from a combine harvester in operation over a period of time during which a blockage of crop residue material occurred. Curve 100 represents the air pressure measured at the pressure sensor location indicated in Figure 2a (at one of the two sides of the cleaning shoe 32), while curve 101 represents the signal obtained from the yield sensor during the same measurement interval. It is seen that the differential pressure (indicated as ΔP in Pa) rises from a first level P1 to a second level P2 within a period of about 100 seconds and stays at the higher level for several minutes. The difference between levels P1 and P2 is about 40 Pa. According to an embodiment of the invention, such a pressure increase is considered to be above a threshold of about 25 Pa that could be indicative of a residue blockage. Also the rate of change of the pressure rise (about 0.4 Pa/s) is above an applicable threshold of 0.25 Pa/s) according to embodiments of the invention, so as to be indicative of a potential blockage.

Before the pressure rise, the yield sensor exhibits a typical behaviour illustrated by curve 101 that is indicative of normal harvesting. The impact of grains on the detector plate is not a steady signal but grains are impacting regularly and consistently, which is in line with normal harvesting conditions. At the start of the pressure rise, it is seen that the yield signal 101 increases together with the pressure rise. However, while the pressure remains high, the yield signal drops and stays at a low level. This indicates that no or very little grain reaches the top of the grain elevator, indicating that the normal harvesting process has been disturbed due to a blockage. If the pressure rise were related to an increase in the amount of processed crops, the yield signal would have maintained a behaviour similar to the behaviour exhibited before the pressure rise. As this is not the case, the pressure rise is attributed to a blockage of crop residue.

According to another embodiment, the verification signal is produced by a grain loss sensor. When a rise in the pressure is caused by an increase of the throughput, the grain loss should also increase. When this is not the case, the pressure rise is likely caused by a blockage. Therefore, a grain loss related signal that does not change when the pressure-related parameter rises above a given threshold will trigger the control unit 50 to indicate the occurrence of a blockage of residue material. This is illustrated by the grain loss signal depicted as curve 102 in Figure 3c, recorded simultaneously with the signals shown in Figures 3a and 3b.

A grain loss sensor is known as such, and can be implemented in a harvester according to the invention in any known way. According to an embodiment, the grain loss is measured by a knocking sensor mounted on a plate installed downstream of the upper sieve 8 and configured to measure impacts of grains ejected from the sieve.

According to another embodiment, the verification signal is produced by a tailings return sensor. This is a sensor that is also known as such. The sensor is configured to measure the amount of tailings being returned to the threshing rotor and/or to the sieves via the tailings return auger 10 and the tailings elevator 11. It is known for example to measure the mass flow rate of tailings by a light sensitive sensor mounted adjacent a window in the sidewall of the tailings elevator 11. Other tailings flow rate sensors include a pivotable paddle on the tailings elevator 11. The paddle pivots rearward under load and its position is detected with a Hall-effect proximity sensor, in relation to a fixed paddle. The time differential between the paddles determines the volume. Another alternative consists of a potentiometer having a shaft through its axis with an arm attached to the shaft. The shaft rotates as the arm moves up or down with the volume of grain being conveyed by the tailings cross auger 10. Again, when a rise of a pressure-related parameter is caused by increased throughput, the tailings return flow also increases. When the tailings return flow decreases and stays at a low level, the increase of the pressure-related parameter is likely caused by a blockage. This is illustrated by the tailings return related signal 103 depicted in Figure 3d, recorded simultaneously with the signals shown in Figures 3a to 3c.

Besides the above-described verification signals, other signals can be used to confirm a blockage event. If a weed seed mill is present for example, the power consumption of the weed seed mill decreases when a blockage occurs upstream of the weed seed mill, obstructing the weed seed mill's inlet. A transducer arranged to record a signal representative of the weed seed mill power consumption can therefore be used as a sensor for producing the verification signal. Also, the rotational speed of the weed seed mill measured by a speed sensor produces a noisy signal when the weed seed mill is operating normally, as a consequence of high-frequency impacts. Weed seeds cause high-frequency impacts as they are being processed in the weed seed mill, typically by being smashed in order to damage and devitalize them. When a blockage occurs, the speed signal is more smooth as no or almost no weed seeds are being taken in anymore by the weed seed mill. Therefore, a measurement of high frequency noise components of the weed seed mill speed can be used as a verification signal. The term 'high-frequency' refers to frequencies generated by the impact of weed seeds in the weed seed mill that are similar to noise signals in signal processing.

The behaviour of the power consumption of the chopper 22 and the spreader 23 is similar to the behaviour of the power consumption of the weed seed mill when a blockage occurs that blocks the inlet to the chopper and the spreader. Therefore signals related to the power consumption of the chopper and the spreader can be used as verification signals.

The combined behaviour of the pressure-related parameter(s) and of one or more verification signals obtained from other sensors can be verified in a two or multistep process, i.e. first checking whether the increase of the pressure-related parameter(s) is above a given threshold, and thereafter checking the behaviour of the verification signal or signals.

Alternatively, the two or more steps can be combined in a single verification algorithm that enables verifying the combined behaviour in a single step. An example of a possible verification algorithm is based on two differential pressure signals obtained on both sides of the upper sieve (at the position shown in Figure 2a) combined with a yield sensor signal. At regular verification times t, a parameter can be calculated as the sum of the differential pressures at the two locations at time t-t0 divided by the crop flow at time t. The value of t0 can be around 10s for example, to take into account the reaction time for the blockage to have an effect on the yield signal. The value of t0 can also be zero seconds (i.e. no reaction time is taken into account). A blockage indication can be given when the above-described parameter exceeds a given threshold.

As stated above, the control unit 50 in a harvester according to the invention is configured to produce an indication that a blockage of crop residue is occurring when a given rise of a pressure-related parameter is detected and confirmed by the behaviour of a verification signal. The indication given can be produced in various ways. It can be an auditive or visual signal given to the operator of the harvester for example.

According to embodiments, a blockage mitigating action can be launched when the pressure-related parameter(s) and the verification signal(s) indicate the occurrence of a residue blockage. The mitigating action can be communicated to the operator who then manually initiates the action, or the mitigating action can be launched automatically by a control signal generated by the control unit 50 when a blockage is detected.

One or more of the following mitigating actions can be taken according to embodiments of the invention. Increasing the speed of the blower fan 21 is one possible action. Slowing down the speed of the harvester as a whole is another possible action. Increasing the speed of the chopper 22 and/or of the spreader 23 is another possible action. Multiple mitigating actions can be activated sequentially or simultaneously.

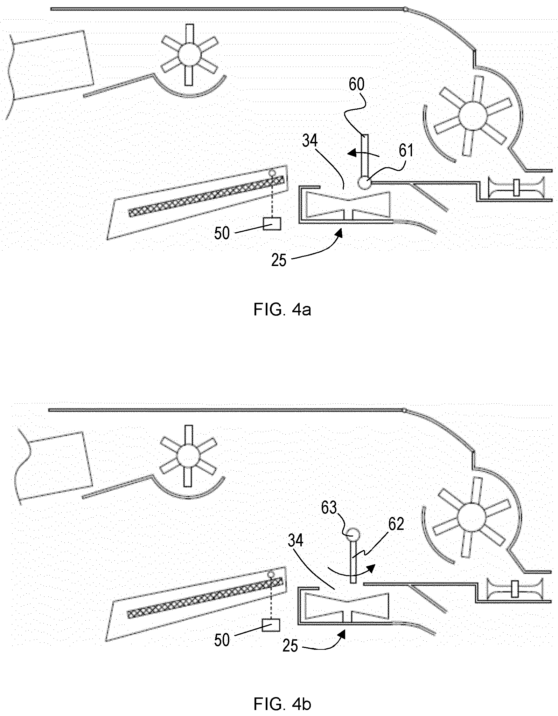

When the harvester includes a weed seed mill, the blockage can occur at the inlet of the weed seed mill. To guide crop residue towards the weed seed mill, it is known to provide guide doors or panels which may be pivotable into various positions. Patent publication document WO2023049282 describes a system wherein pivotable guide doors are mounted adjacent the weed seed mill inlet (in fact two separate inlets are provided above two separate weed seed mill rotors mounted on either side of a belt drive, and two pivotable doors are mounted adjacent the respective inlets). This configuration is illustrated in Figure 4a. The doors 60 can be pivoted about pivot axis 61 located adjacent and downstream of the inlet 34 of the weed seed mill 25. The doors 60 are pivoted downward in the direction of the arrow to close off the inlet 34 or upward as shown in the drawing to guide crop residue towards the inlet 34.

Mitigating a blockage at the weed seed mill inlet can be done by enabling the crop residue to bypass the weed seed mill, i.e. to flow past said inlet. In the system illustrated in Figure 4a, this could be done by closing the baffle doors 61, which is therefore a possible mitigating action according to embodiments of the invention if the weed seed mill is configured in this way. However, the blockage could prevent the closure of the doors 60 in this configuration. Therefore another solution is presented in Figure 4b. At least one pivotable baffle door 62 is mounted above the inlet 34 to the weed seed mill 25, the door being pivotable about a pivot axis 63 situated above the inlet 34 and distanced therefrom. When the door is in the downward position as shown in the drawing, crop residue is guided towards the inlet 34. If a blockage occurs at the inlet, the door 62 can be pivoted to the right as indicated by the arrow, thereby freeing the bypass path. When the latter configuration is present in the harvester, a mitigation action may then be to pivot the door 62 to the right, to thereby create the bypass path. This action will not be hindered by a blockage at the inlet of the weed seed mill. Actuation of the pivoting of the door or doors 60 or 62 can be realized in any suitable way, by a motorized actuator that can be controlled from the operator's cabin, or automatically by the control unit 50 upon determining that a blockage is occurring.

The threshold for the pressure-related parameter(s) can be set in accordance with various criteria based on prior knowledge and data regarding the occurrence of blockages of the crop residue material. According to embodiments, dynamic thresholds are applied, i.e. thresholds which are a function of other parameters related to the harvester operation. For example, the thresholds may be a function of the blower fan speed : air pressure detected by the sensor naturally increases at higher fan speed, hence the thresholds may be set higher for higher fan speeds. The thresholds may also be a function of the type of crop, the moisture of crop, the wind speed.

For example, fine seeds (like grass seed or canola) may have a lower threshold value than small seeds (like wheat or barley) or coarse seeds (like soybeans or corn). Wet crop may have a lower threshold due to the greater probability of blockages occurring than with dry crop material. The wind speed and its orientation to the vehicle can influence the internal pressure of the vehicle. This is because the external wind may be blowing against or with the internal blower fan of the cleaning system. If the combine is driving into a headwind, the wind is blowing in the same direction as the blower fan and may reduce the internal air pressure of the machine. This may require the threshold value to be lower than if the wind is blowing from the rear (a tailwind), which is working against the blower fan and increasing the internal pressure.

According to embodiments, after performing one or more mitigating actions, initiated either manually by the operator or automatically, the control unit 50 is configured to directly perform another blockage detection verification by checking the one or more pressure-related parameters as defined above, and one or more verification signals. This can be repeated until the blockage is removed.

According to embodiments, data obtained from the pressure sensor(s) and the additional sensors are continually fed to a machine learning (ML) algorithm implemented in an artificial intelligence hardware or software application incorporated in the control unit. The **ML** algorithm may be configured to assess the behaviour of the one or more pressure-related parameters relative to the predefined threshold and the corresponding behaviour of the one or more additional sensors. Possibly, additional inputs regarding crop or weather conditions can be fed to the ML algorithm, as well as indications regarding the severity of a blockage event. On the basis of this data, the ML algorithm is configured to finetune the ability to detect crop residue blockage at an early stage, for example by adjusting the thresholds for the pressure-related parameter(s) or the expected behaviour of the verification signals.

## Claims

1. A combine harvester (1) comprising :
• a separating system for separating grains from crop residue, the separating system including one or more threshing rotors (5) and a cleaning shoe (32) including one or more sieves (7,8,9),
• downstream of the separating system, a residue removal system for removing crop residue from the harvester,
• a residue transport system (20,21) configured to transport crop residue from the separating system to the residue removal system, said residue transport system comprising a beater (20) for transporting large crop residue from the one or more threshing rotors (5) to the residue removal system, and a blower (21) for blowing light crop residue from the one or more sieves (5) to the residue removal system,
• a residue blockage detection system comprising :
∘ one or more air pressure sensors (40) mounted on the harvester at one or more locations along trajectories (30,31) of residue material from the separating system to the residue removal system,
∘ a control unit (50) configured to receive signals from said one or more air pressure sensors (40),
**characterized in that** the control unit (50) is further configured to :
- receive one or more signals from respective one or more further sensors mounted on the combine harvester,
- verify whether at least one pressure-related parameter rises above a predefined threshold,
- verify whether said rise is accompanied or followed by a predefined behaviour of the signals received from said one or more further sensors,
- produce an indication that a blockage of crop residue is occurring, when the detected rise of the pressure-related parameter is accompanied or followed by said predefined behaviour.

2. The combine harvester according to claim 1, wherein one or more pressure sensors (40) are mounted on the cleaning shoe (32).

3. The combine according to claim 1 or 2, wherein the one or more further sensors include a crop yield sensor configured to produce a crop yield related signal, and wherein said predefined behaviour consists of a decrease of the crop yield related signal while the pressure-related parameter remains above said threshold.

4. The combine according to claim 3, wherein the combine comprises two pressure sensors (40) mounted on a cleaning shoe (32) comprising one or more of said sieves (8), and wherein the control unit (50) is configured to :
- determine a value defined as the sum of the pressures or differential pressures measured by the two pressure sensors at a time t - t0 divided by a clean grain flow derived from the crop yield related signal at a time t,
- produce said indication when said value exceeds a predefined threshold.

5. The combine according to claim 4, wherein t0 is a value between 0s and 50s, or between 0s and 20s, or equal to about 10s.

6. The combine according to any one of the preceding claims, wherein the one or more further sensors include a grain loss sensor, and wherein said predefined behaviour consists in the signal received from the grain loss sensor remaining essentially unchanged during and after the rise of the pressure-related parameter, compared to said grain loss related signal before said rise.

7. The combine according to any one of the preceding claims, wherein the one or more further sensors include a tailings return sensor, and wherein said predefined behaviour consists in a tailings return related signal received from the tailings return sensor decreasing and remaining at a lower value compared to said tailings return related signal before said rise.

8. The combine according to any one of the preceding claims, wherein the residue removal system comprises a weed seed mill (25), and wherein the one or more further sensors include a sensor configured to measure the power consumption of the weed seed mill, and wherein said predefined behaviour consists of a decrease of said power consumption by the weed seed mill.

9. The combine according to any one of the preceding claims, wherein the residue removal system comprises a weed seed mill (25), and wherein the one or more further sensors include a sensor configured to measure the speed of the weed seed mill, and wherein said predefined behaviour consists of a decrease of noise components within a signal representative of said speed.

10. The combine according to any one of the preceding claims, wherein the residue removal system comprises a chopper (22) and a residue spreader (23), and wherein the one or more further sensors include a sensor configured to measure the power consumption of the chopper (22) and/or a sensor configured to measure the power consumption of the residue spreader (23) and wherein said predefined behaviour consists of a decrease of said power consumption of the chopper and/or of the residue spreader.

11. The combine harvester according to any one of the preceding claims, wherein the threshold for the pressure-related parameter is a function of one or more of the following parameters : rotational speed of the blower (21), type of crop, moisture of crop, atmospheric pressure, wind speed.

12. The combine harvester according to any one of the preceding claims, wherein the control unit (50) enables a blockage mitigating action when the detected rise of the pressure-related parameter is accompanied or followed by said predefined behaviour.

13. The combine harvester according to claim 12, wherein the control unit (50) is configured to communicate to an operator of the combine harvester that a blocking mitigating action is to be initiated by said operator.

14. The combine harvester according to claim 12, wherein the control unit (50) is configured to generate a control signal configured to automatically activate a blockage mitigating action.

15. The combine according to any one of claims 12 to 14, wherein the blockage mitigating action is one or more of the following :
- increasing the rotational speed of the blower (21),
- decreasing the speed of the combine harvester (1),
- increasing the speed of a chopper (22) and/or of a spreader (23) included in the residue removal system,
- creating a path for bypassing a weed seed mill (25) included in the harvester.

16. The combine according to claim 15, wherein the blockage mitigating action comprises creating a path for bypassing a weed seed mill (25) included in the harvester and said path is created by pivoting a pivotable guide door (60,62) arranged above an inlet (34) of the weed seed mill (25).

17. The combine according to any one of claims 12 to 16, wherein after each mitigating action, the control unit (50) is configured to again verify :
- whether the pressure-related parameter rises above a predefined threshold, and
- whether said rise is accompanied or followed by a predefined behaviour of the signals received from said one or more further sensors.

18. The combine harvester according to any one of the preceding claims, wherein the control unit (50) is configured to apply a machine learning algorithm configured to improve the ability of detecting a blockage on the basis of an assessment of :
- the behaviour of the at least one pressure-related parameter with respect to said predefined threshold,
- the behaviour of the signals obtained form the one or more further sensors,
- possibly further input related to harvesting conditions and/or the severity of a blockage event.

19. The combine harvester according to any one of the preceding claims, wherein said pressure-related parameter is one or more of the following :
- a pressure or a differential pressure measured by the one or more pressure sensors,
- an increase of the pressure or the differential pressure measured by the one or more pressure sensors, from a first value (P1) to a second value (P2),
- a rate of change of the pressure or differential pressure measured by the one or more pressure sensors.

20. The combine harvester according to claim 19, wherein :
- the predefined threshold for an increase of the differential air pressure measured by the one or more air pressure sensors is between 20 Pa and 30 Pa, and/or
- the predefined threshold for a rate of change of the pressure measured by the one or more air pressure sensors is between 0.20 Pa/s and 0.30 Pa/s.
